# EUROPEAN PATENT APPLICATION

(11) **EP 1 630 939 A2**
(43) Date of publication of application: **01.03.2006**
(21) Application number: 05255162.9
(22) Date of filing: 22.08.2005
(51) Int. Cl.: H02M 3/335

(54) **Electronic device with switching power circuit and power supply control method**

(30) Priority: 23.08.2004 JP 2004242540
(71) Applicant: ORION ELECTRIC CO., Ltd., Takefu-City, Fukui 915-8555 (JP)
(72) Inventor: Tani, Katsuhiko, c/o Int Prop. Dept,, Takefu-city, Fukui 915-8555 (JP)
(74) Representative: Paget, Hugh Charles Edward

(57) **Abstract**

To provide electronic equipment equipped with a switching power circuit which oscillates intermittently when an apparatus is OFF, where the apparatus is prevented from failing to start up upon power-on due to intermittent oscillation. A microcomputer 110 judges state of intermittent oscillation based on an oscillation on/off signal received from an oscillation monitoring circuit 17 and indicating the state of intermittent oscillation and starts to supply power to a load 120 according the state of intermittent oscillation rather than in quick response to closure of a power switch 2a.

## Description

### BACKGROUND OF THE INVENTION

### Field of the invention

The present invention relates to electronic equipment equipped with a switching power circuit. More particularly, it relates to electronic equipment equipped with a switching power circuit which oscillates intermittently when an apparatus is OFF.

### Description of the Related Art

Small, low-loss switching power supplies are used to supply power to electronic equipment. Switching power supplies can be reduced in size and weight if switching frequency is increased, but increases in the frequency result in increased switching losses. To reduce the switching losses, conventionally oscillation is turned on and off (intermittent control) when the apparatus is "in a power-off state."

Conventional techniques related to such intermittently-oscillating switching power circuits have been disclosed, for example, Japanese Patent Laid-Open Publication No. H03-243167, Japanese Patent Laid-Open Publication No. H04-12666, Japanese Patent Laid-Open Publication No. H04-29482, Japanese Patent Laid-Open Publication No. H09-252218, Japanese Patent Laid-Open Publication No. 2000-287444, Japanese Patent Laid-Open Publication No. 2000-354372, Japanese Patent Laid-Open Publication No. 2000-224844, Japanese Patent Laid-Open Publication No. 2002-51546 and Japanese Patent Laid-Open Publication No. 2003-224973 (Patent Documents 1 through 9).

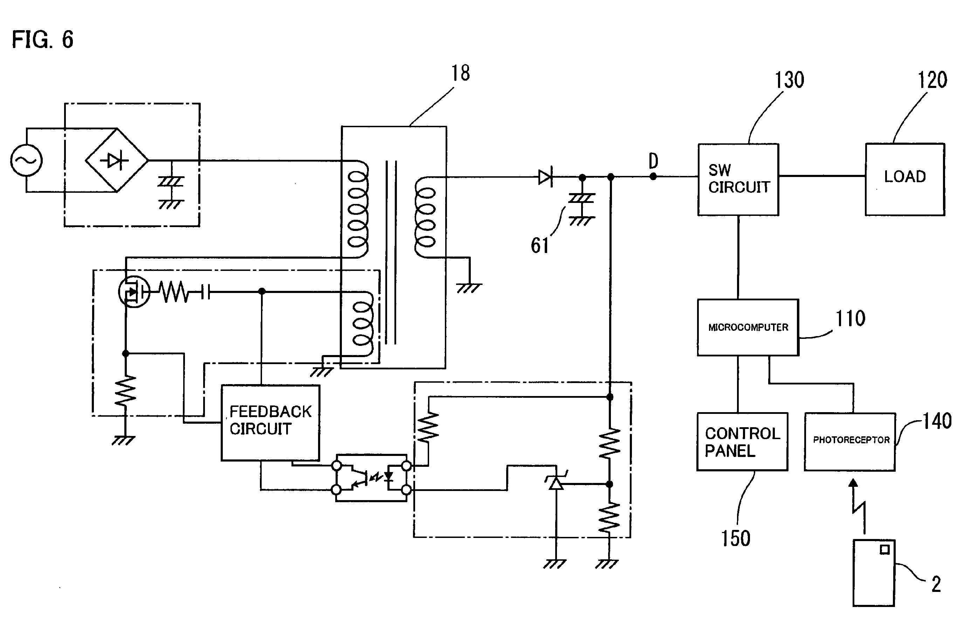

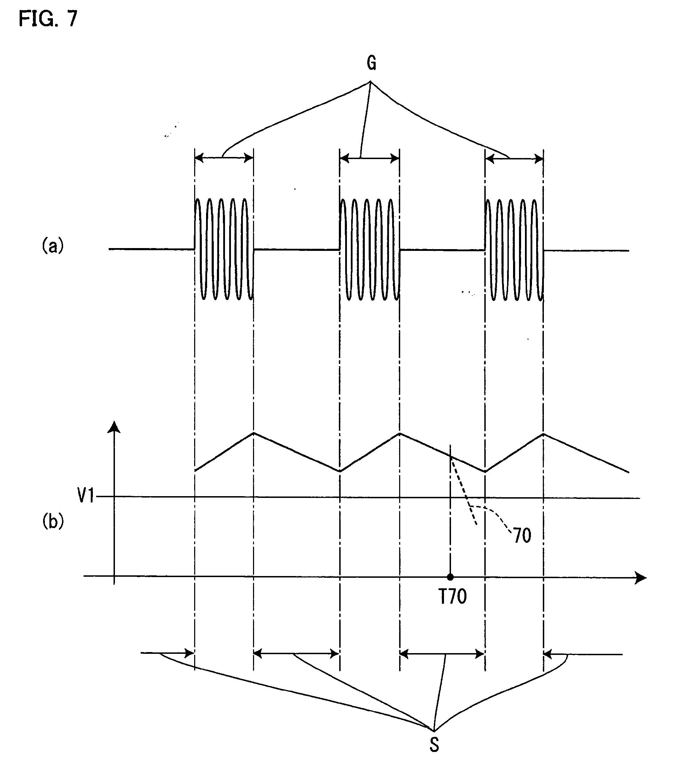

Intermittent oscillation systems reduce switching losses by interrupting oscillating operation on the primary side at regular intervals. When oscillation is OFF, since no power is supplied from the primary side to the secondary side, power is supplied to a load using charges stored in a capacitor provided on the secondary side. However, when oscillation is OFF, if power consumption on the load side increases sharply (e. g. , when an apparatus is starting up from a power-off state upon closure of its power switch), the capacitor may run out of power, resulting in a malfunction of the apparatus (e.g., start-up failure of the apparatus). FIG. 6 shows an example of a conventional switching power circuit which oscillates intermittently. FIG. 7 shows an oscillating power waveform (a) and voltage waveform (b) at point D in FIG. 6. During periods G in which oscillation is ON, a secondary-side capacitor 61 is charged and a voltage level at point D rises. During periods S in which oscillation is OFF, the capacitor 61 is discharged and the voltage level falls (FIG. 7 (b)) . When a power switch is turned on to start up an apparatus from a power-off state, if this is done during a period G in which oscillation is ON, since power is supplied from the primary side to the secondary side, start-up errors of the apparatus will not be caused. However, if a power switch is turned on during a period S in which oscillation is OFF (when no power is supplied from the primary side to the secondary side) and if the amount of electrostatic charge in the capacitor 61 is lower than a certain level (T70 in FIG. 7(b)), the action of starting power supply to a load 120 in quick response to the power-on command will sharply increase power consumption on the load side (the load 120, a microcomputer 110, etc.), causing the voltage level to fall sharply (dashed line 70 in FIG. 7 (b)) below a voltage level V1 needed for operation of the load 120 and resulting in a failure to start up the apparatus.

To deal with this problem, it has been common practice to increase the capacitance of the capacitor or reduce the period of an intermittently oscillating operation (the oscillation OFF period S is reduced). However, the former method increases the cost and size of the apparatus while the latter method lessens the effect of reducing switching losses.

### SUMMARY OF THE INVENTION

In view of the above circumstances, the present invention has an object to provide electronic equipment equipped with a switching power circuit which oscillates intermittently when an apparatus is OFF, where the apparatus is prevented from failing to start up upon power-on due to intermittent oscillation.

As set forth in claim 1, there is provided electronic equipment equipped with a switching power circuit which oscillates intermittently when an apparatus is OFF, characterized in that the electronic equipment comprises an oscillation monitoring circuit for detecting on/off timing of oscillating operation of the switching power circuit; and when the electronic equipment in a power-off state is powered on, power supply to a load is started with a predetermined timing according to state of the oscillating operation obtained from the oscillation monitoring circuit.

With the above configuration, the oscillation monitoring circuit detects state of oscillation (oscillation ON or oscillation OFF) on the primary side, and when an apparatus is powered on from a power-off state, power supply to a load 120 is started with a predetermined timing according the state of oscillation on the primary side rather than in quick response to the power-on command. Incidentally, the phrase "power-off state" does not mean a state in which the entire apparatus is completely powered off, but it means a state, such as a so-called waiting state or standby state, in which most of loads in the apparatus do not consume power, but part of the apparatus, such as a microcomputer, is conducting.

As set forth in claim 2, the electronic equipment equipped with a switching power circuit according to claim 1 comprises: a microcomputer which controls the apparatus; and a switch circuit which turns on and off power supply to the load, characterized in that: the oscillation monitoring circuit comprises a rectifier and smoothing circuit and a divider circuit to convert a power waveform on a secondary side of the switching power circuit into an oscillation on/off signal to be inputted into the microcomputer, and the microcomputer turns on the switch circuit with a predetermined timing according to the oscillation on/off signal and thereby starts power supply to the load.

With the above configuration, the intermittent oscillation waveform appearing on the secondary side with the same frequency as on the primary side is rectified and smoothed into square waves by the rectifier and smoothing circuit of the oscillation monitoring circuit and converted by the divider circuit of the oscillation monitoring circuit into a level suitable for input into the microcomputer, thereby generating an oscillation on/off signal, which is then inputted into the microcomputer. When an apparatus is powered on from a power-off state, the microcomputer starts to supply power to a load with a predetermined timing according the state of oscillation on the primary side detected from the oscillation on/off signal rather than in quick response to the power-on command.

As set forth in claim 3, the electronic equipment equipped with a switching power circuit according to claim 2 is characterized in that the oscillation monitoring circuit has a voltage limiting circuit.

With the above configuration, the voltage limiting circuit prevents a signal of a voltage higher than a certain level from being inputted into the microcomputer.

As set forth in claim 4, the electronic equipment equipped with a switching power circuit according to claim 3 is characterized in that power supply to the load is started during a period in which the oscillating operation of the switching power supply, as detected by the oscillation monitoring circuit or by the oscillation monitoring circuit and the microcomputer, is ON.

With the above configuration, when an apparatus is powered on from a power-off state, power supply to the load is started during the period in which the oscillation on the primary side is ON rather than in quick response to the power-on command.

As set forth in claim 5, the electronic equipment equipped with a switching power circuit according to claim 4 is characterized in that power supply to the load is started during the first 80% of the period in which the oscillating operation of the switching power supply is ON.

With the above configuration, when an apparatus is powered on from a power-off state, power supply to the load is started during the first 80% of the period in which the oscillation on the primary side is ON rather than in quick response to the power-on command.

As set forth in claim 6, there is provided a power supply control method for electronic equipment equipped with a switching power circuit which oscillates intermittently when an apparatus is OFF, characterized by comprising the steps of: detecting on/off timing of oscillating operation of the switching power circuit; and starting to supply power to a load during a period in which the oscillating operation of the switching power supply is ON after the electronic equipment in a power-off state is powered on.

As set forth in claim 7, the power supply control method for electronic equipment equipped with a switching power circuit according to claim 6 comprises a step of supplying power to the load during the first 80% of the period in which the oscillating operation of the switching power supply is ON.

### BRIEF DESCRIPTION OF THE DRAWINGS

Fig 1 is a block diagram showing only that part of a switching power circuit which is relevant to the present invention.
Fig. 2 is diagrams showing waveforms, including an intermittently oscillating power waveform (a), signal waveform (b) at point A in FIG. 1, and voltage waveform (c) at point B in FIG. 1.
Fig. 3 is a flowchart showing procedures for monitoring the period of an intermittently oscillating operation.
Fig. 4 is a flowchart showing a power-on process.
Fig. 5 is a perspective view showing a liquid crystal display.
Fig. 6 is an example of a conventional switching power circuit which oscillates intermittently.
Fig. 7 is diagrams showing waveforms, including an intermittently oscillating power waveform (a) and signal waveform (b) at point D in FIG. 6.

### DETAILED DESCRIPTION OF THE PREFERRED EMBODIMENTS

A concrete example of the present invention will be described with reference to the drawings. Incidentally the embodiment described below is only a form in which the present invention is embodied and is not intended to confine the present invention thereto.

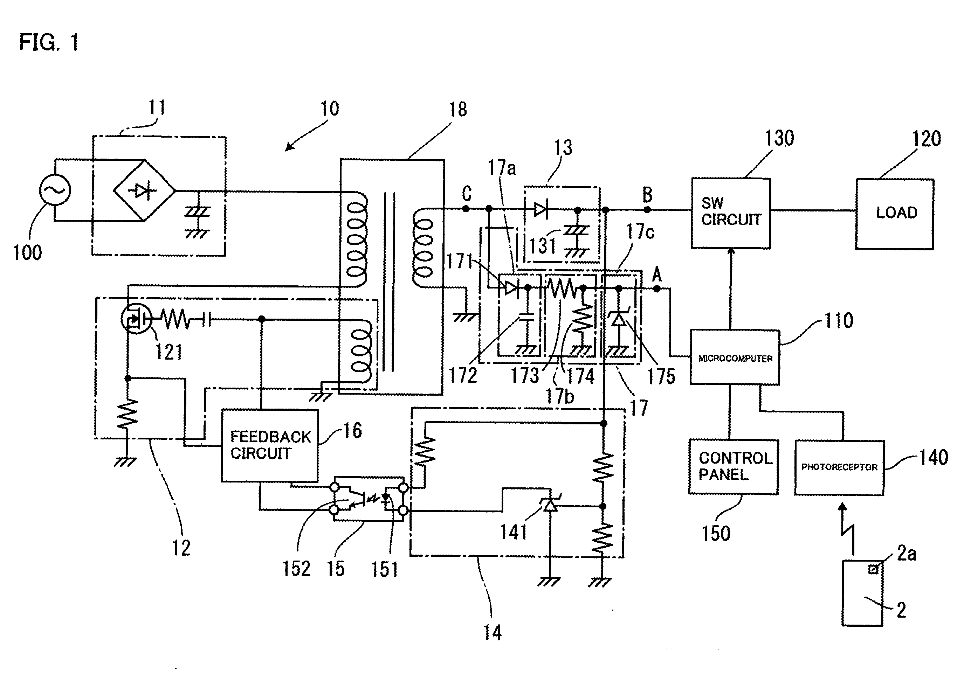

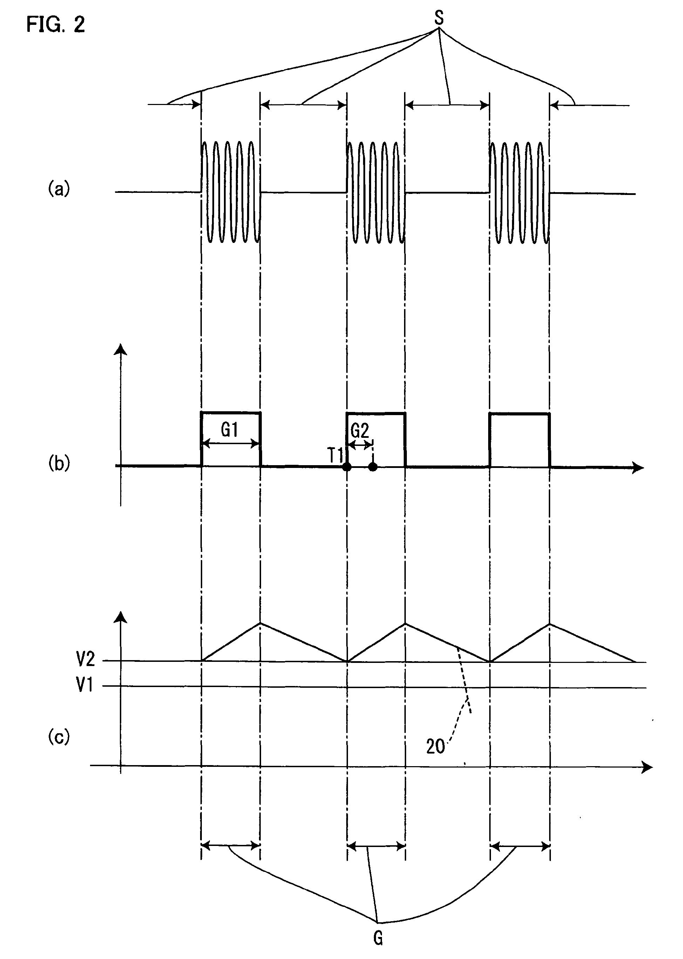

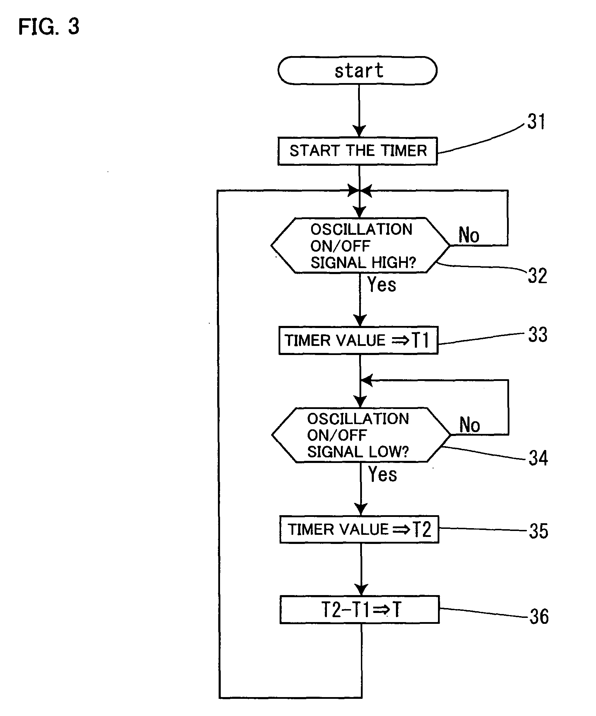

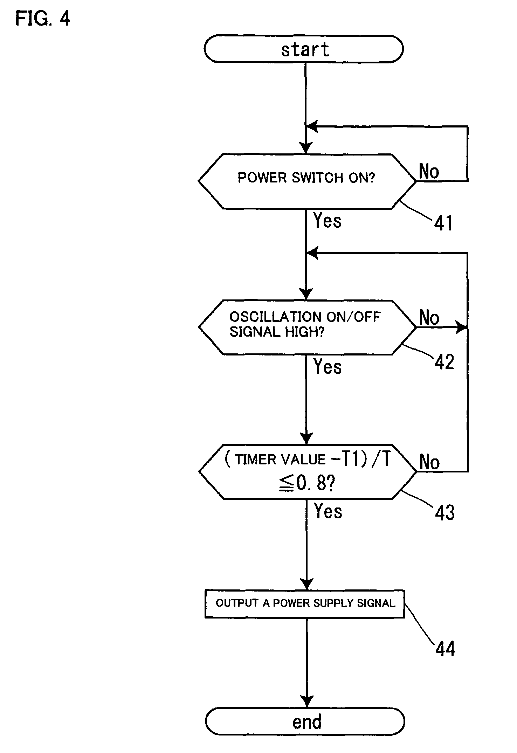

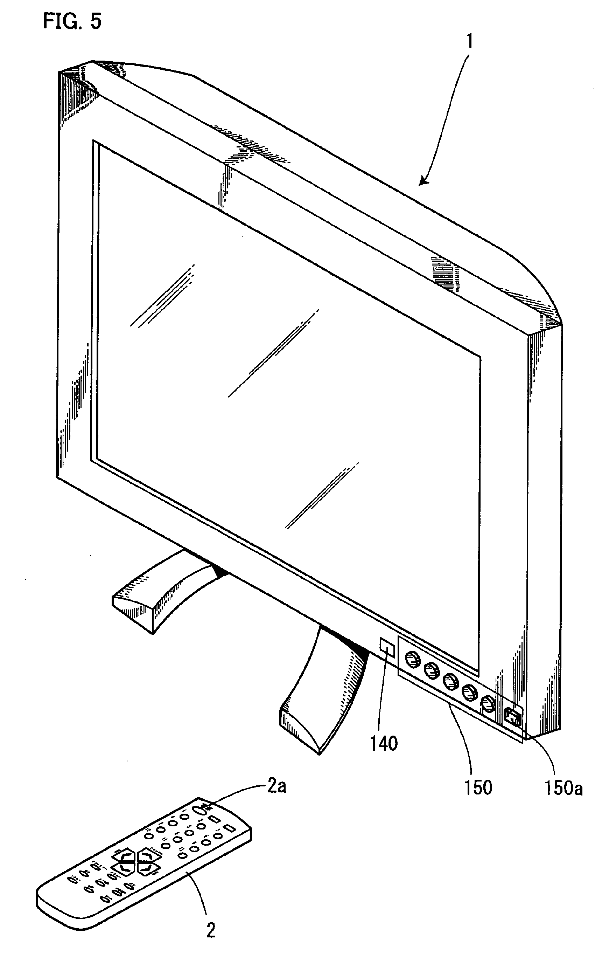

FIG. 1 is a circuit block diagram showing only that part of a switching power circuit of an electronic apparatus which is relevant to the present invention. FIG. 2 shows an oscillating power waveform (a), signal waveform (b) at point A in FIG. 1, and voltage waveform (c) at point B in FIG. 1 . FIGS. 3 and 4 are flowchart showing that part of operation of a microcomputer which is relevant to the present invention. FIG. 5 is a perspective view showing a liquid crystal display, which is an electronic apparatus according to this example.

As shown in FIG. 1, a switching power circuit 10 of a liquid crystal display (hereinafter referred to as the LCD) 1 has a rectifier and smoothing circuit 11 which rectifies and smoothes commercial power 100, a switching circuit 12 connected to a primary winding of a transformer 18 to which a resulting DC voltage is applied, a rectifier and smoothing circuit 13 which rectifies and smoothes secondary power, a voltage detection circuit 14 for the resulting secondary DC power, a photocoupler 15 which optically transmits a signal from the voltage detection circuit 14 to a primary-side circuit, a feedback circuit 16 which controls operation of the switching circuit 12 based on the signal and the like obtained by the voltage detection circuit 14 and the photocoupler 15, an oscillation monitoring circuit 17, etc. Also, the LCD 1 is equipped with a microcomputer 110 which controls the entire apparatus, a switch circuit 130 installed on a power line leading to a load 120, a photoreceptor 140 which receives signals from a remote control 2, a control panel 150, etc.

The switching power circuit 10 performs an oscillating operation by making a transistor 121 in the switching circuit 12 turn on and off a DC current flowing through the primary winding of the transformer 18, and thereby supplies the secondary side with a power supply voltage proportional to a winding ratio. The LCD 1 according to this example performs an intermittently oscillating operation by switching on and off the oscillating operation when the apparatus is OFF. Incidentally, the phrase "the apparatus is OFF" does not mean a state in which the entire apparatus is completely powered off, but it means a state, such as a so-called waiting state or standby state, in which most of loads in the apparatus do not consume power, but part of the apparatus (such as the switching power circuit 10 and microcomputer 110) is conducting.

The operation of intermittent oscillation will be outlined with reference to FIGS. 1 and 2. During an intermittently oscillating operation, the DC voltage on the secondary side (point B in FIG. 1) is checked with reference to the capacitance of a shunt regulator 141 of the voltage detection circuit 14, and if the reference is exceeded (if a capacitor 131 stores a predetermined charge), a light-emitting diode 151 of the photocoupler 15 turns on (emits light) and so does a phototransistor 152, causing a High signal to be inputted into the feedback circuit 16 from the photocoupler 15. Upon receiving the High signal from the photocoupler 15, the feedback circuit 16 turns off the transistor 121 of the switching circuit 12 to stop oscillation (period S in FIG. 2) . As the oscillation stops, no power is supplied to the secondary side and the capacitor 131 discharges, lowering the voltage at point B gradually (period S in FIG. 2(c)). When the voltage reaches a fixed value (V2), the shunt regulator 141 turns off and so does the light-emitting diode 151, causing the signal transmitted from the photocoupler 15 to the feedback circuit 16 to go low. When the signal from the photocoupler 15 goes low, the feedback circuit 16 makes the switching circuit 12 oscillate. In this way, an intermittently oscillating operation is performed by the on/off control of the oscillation, keeping the voltage level on the secondary side from falling below the fixed value (V2).

A waveform having the same period as the oscillating power waveform (FIG. 2(a)) generated as described above appears on the secondary side (point C in FIG. 1). In the oscillation monitoring circuit 17, the intermittently oscillating waveform is rectified and smoothed into square waves by a rectifier and smoothing circuit 17a composed of a diode 171 and capacitor 172 and converted by a divider circuit 17b composed of a resistor 173 and resistor 174 into a level suitable for input into the microcomputer 110, thereby generating an oscillation on/off signal (FIG. 2(b)), which is then inputted into the microcomputer 110. Incidentally, the microcomputer 110 is protected by a voltage limiting circuit 17c consisting of a Zener diode 175 so that oscillation on/off signals higher than a predetermined level will not be inputted into it.

Now, with reference to FIGS. 2 to 4, a brief description will be given of operations which take place after a power switch 150a on the LCD 1 (or a power switch 2a on the remote control 2) is turned on when the apparatus is in a power-off state (during an intermittently oscillating operation). FIG. 3 is a flowchart showing procedures for monitoring the period of an intermittently oscillating operation. The monitoring is continued as long as the microcomputer 110 is operating (at least while intermittent oscillation is going on). The microcomputer 110 starts a timer upon start-up (Step 31) and senses the level of an oscillation on/off signal received from the oscillation monitoring circuit 17. When the signal goes high (oscillation becomes on), the microcomputer 110 stores the timer value at that time point by assigning it to a variable T1 (Step 32 and Step 33) . When the signal goes low (Step 34), the microcomputer 110 assigns the timer value at that time point to a variable T2 (Step 35) and stores the difference between T2 and T1 (oscillation ON period) by assigning it to a variable T (Step 36). Consequently, the previous "oscillation ON period" is held in the variable T. Incidentally, although a timer unit which implements a timer function and a storage unit which stores variables are not shown in the figure, they may be incorporated in the microcomputer as functions of the microcomputer or implemented by circuit configurations separate from the microcomputer.

FIG. 4 is a flowchart showing a power-on process of the microcomputer 110. In Step 41, the microcomputer 110 senses the presence or absence of an input from the power switch 150a or 2a. If there is an input, the microcomputer 110 senses the level of the input (Step 42) . If the signal is high (oscillation is ON), the microcomputer 110 judges whether the difference between the current timer value and T1 (G2 in FIG. 2 (b)) is 80% or T (G1 in FIG. 2 (b)) or below (Step 43) . If the judgment is affirmative, the microcomputer 110 instructs the switch circuit 130 to supply power to the load 120 (Step 44) . If the conditions in Steps 42 Step 43 are not satisfied, the microcomputer 110 does not allow the switch circuit 130 to start supplying power to the load 120 until they are satisfied.

Consequently, the timing to start supplying power to the load 120 falls within the first 80% of the period in which the oscillating operation is ON regardless of the timing to turn on the power switch 150a or 2a, making it possible to avoid a start-up failure of the apparatus which would occur if power supply to the load were started in quick response to power-on in the oscillation OFF period S, causing the voltage level to fall sharply (dashed line 20 in FIG. 2(c)) below a voltage level V1 needed for operation of the load. This eliminates the need to increase the capacitance of the capacitor 131 on the secondary side more than necessary, making it possible to downsize the apparatus, or increases the period of intermittent oscillation (oscillation OFF period), making it possible to reduce switching losses.

Incidentally, although in this example, the timing to start supplying power to the load 120 falls within the first 80% of the period in which the oscillating operation is ON, the present invention is not limited to this. The timing can be set, taking into consideration interrelationships among the capacitance of the capacitor 131, the capacitance of the load 120, etc. (so that the voltage level at point B will not fall below the voltage level V1 needed for operation of the load during start-up of the load). Alternatively, the timing may be set to fall within the "period in which the oscillating operation is ON" or extended to part of the "period in which the oscillating operation is OFF."

Also, although this example has been described citing an LCD which is a piece of audio-visual equipment, the present invention is not limited to audio-visual equipment and include electric heating appliances, heating/cooling apparatus, etc. Incidentally, audio-visual equipment includes, for example, television sets, VTRs, DVD recorders/players, HDD recorders/players, radio sets, record players, cassette decks, home theater systems, audio component systems, AV amplifiers, MD recorders/players, and laser disc players. The electric heating appliances include, for example, microwave ovens, oven ranges, toasters, IH cooking heaters, and the irons while heating/cooling apparatus include, for example, air conditioners, fan heaters, electric blankets, electric carpets, electric fans. Besides, the electronic equipment according to the present invention includes, refrigerators, washing machines, bedding driers, clothes driers, dehumidifiers, humidifiers, toilet seats with a washing function, ventilation systems, personal computers, cell phones, telephones, clocks, digital cameras, video cameras, vacuum cleaners, gaming machines, projectors, etc.

The effects of the invention are as follows.

With the electronic equipment set forth in claim 1, i.e., the electronic equipment equipped with a switching power circuit which oscillates intermittently when an apparatus is OFF, characterized in that the electronic equipment comprises an oscillation monitoring circuit for detecting on/off timing of oscillating operation of the switching power circuit, and when the electronic equipment in a power-off state is powered on, power supply to a load is started with a predetermined timing according to state of the oscillating operation obtained from the oscillation monitoring circuit; it is possible to prevent start-up failure of the apparatus effectively because when the apparatus is powered on from a power-off state, power supply to a load is started with a predetermined timing according the state of oscillation on the primary side rather than in quick response to the power-on command. In short, even if the apparatus is powered on during a period in which the apparatus can fail to start up, i.e. , "during a period in which oscillation is OFF and the amount of electrostatic charge in the capacitor is lower than a certain level," power supply to the load can be started by avoiding this period, making it possible to prevent start-up failure effectively. This eliminates the need to increase the capacitance of the capacitor on the secondary side more than necessary, making it possible to downsize the apparatus, or increases the period of intermittent oscillation (oscillation OFF period), making it possible to reduce switching losses.

With the electronic equipment set forth in claim 2, i.e. , the electronic equipment equipped with a switching power circuit according to claim 1, comprising a microcomputer which controls the apparatus, and a switch circuit which turns on and off power supply to the load, characterized in that the oscillation monitoring circuit comprises a rectifier and smoothing circuit and a divider circuit to convert a power waveform on a secondary side of the switching power circuit into an oscillation on/off signal to be inputted into the microcomputer, and the microcomputer turns on the switch circuit with a predetermined timing according to the oscillation on/off signal and thereby starts power supply to the load; it is possible to generate an oscillation on/off signal to be inputted into the microcomputer using a simple circuit configuration, make the microcomputer determine the state of the oscillating operation (presence or absence of oscillation), and thereby start supplying power to the load.

With the electronic equipment set forth in claim 3, i.e., the electronic equipment equipped with a switching power circuit according to claim 2, characterized in that the oscillation monitoring circuit has a voltage limiting circuit; it is possible to prevent a signal of a voltage higher than a certain level from being inputted in the microcomputer, and thus protect the microcomputer effectively.

With the electronic equipment set forth in claim 4, i.e., the electronic equipment equipped with a switching power circuit according to any of claims 1 to 3, characterized in that power supply to the load is started during a period in which the oscillating operation of the switching power supply, as detected by the oscillation monitoring circuit or by the oscillation monitoring circuit and the microcomputer, is ON; it is possible to prevent start-up errors of the apparatus effectively.

With the electronic equipment set forth in claim 5, i.e. , the electronic equipment equipped with a switching power circuit according to claim 4, characterized in that power supply to the load is started during the first 80% of the period in which the oscillating operation of the switching power supply is ON; it is possible to prevent start-up errors of the apparatus more effectively. In other words, by not starting power supply to the load during the period just before the oscillating operation goes off (just before power supply from the primary side to the secondary side stops), i.e., during the last 20% of the period in which the oscillating operation is ON, it is possible to eliminate start-up errors more reliably.

## Claims

1. Electronic equipment equipped with a switching power circuit which oscillates intermittently when an apparatus is OFF, **characterized in that** the electronic equipment comprises an oscillation monitoring circuit for detecting on/off timing of oscillating operation of the switching power supply; and when the electronic equipment in a power-off state is powered on, power supply to a load is started with a predetermined timing according to state of the oscillating operation obtained from the oscillation monitoring circuit.

2. The electronic equipment equipped with a switching power circuit according to claim 1, comprising: a microcomputer which controls the apparatus; and a switch circuit which turns on and off power supply to the load, **characterized in that**: the oscillation monitoring circuit comprises a rectifier and smoothing circuit and a divider circuit to convert a power waveform on a secondary side of the switching power circuit into an oscillation on/off signal to be inputted into the microcomputer, and the microcomputer turns on the switch circuit with a predetermined timing according to the oscillation on/off signal and thereby starts power supply to the load.

3. The electronic equipment equipped with a switching power circuit according to claim 2, **characterized in that** the oscillation monitoring circuit has a voltage limiting circuit.

4. The electronic equipment equipped with a switching power circuit according to any one of claims 1 to 3, **characterized in that** power supply to the load is started during a period in which the oscillating operation of the switching power supply, as detected by the oscillation monitoring circuit or by the oscillation monitoring circuit and the microcomputer, is ON.

5. The electronic equipment equipped with a switching power circuit according to claim 4, **characterized in that** power supply to the load is started during the first 80% of the period in which the oscillating operation of the switching power supply is ON.

6. A power supply control method for electronic equipment equipped with a switching power circuit which oscillates intermittently when an apparatus is OFF, **characterized by** comprising the steps of: detecting on/off timing of oscillating operation of the switching power supply; and starting to supply power to a load during a period in which the oscillating operation of the switching power supply is ON after the electronic equipment in a power-off state is powered on.

7. The power supply control method according to claim 6, **characterized by** comprising a step of supplying power to the load during the first 80% of the period in which the oscillating operation of the switching power supply is ON.
